# EUROPEAN PATENT APPLICATION

(11) **EP 4 794 093 A1**
(43) Date of publication of application: **19.08.2026**
(21) Application number: 25864541.5
(22) Date of filing: 30.09.2025
(51) Int. Cl.: H01M 50/317

(54) **BATTERY MODULE MANUFACTURING METHOD**

(30) Priority: 20.12.2024 KR 20240193070
(71) Applicant: LG ENERGY SOLUTION, LTD., Seoul 07335 (KR)
(72) Inventor: SON, Hong Se, Daejeon 34122 (KR); KWON, Hee Yong, Daejeon 34122 (KR); KIM, Seok Hee, Daejeon 34122 (KR)
(74) Representative: BCKIP Part mbB
(86) International application number: PCT/KR2025/015548
(87) International publication number: WO 2026/134565

(57) **Abstract**

Disclosed is a battery module manufacturing method including (S1) a step of receiving a cell assembly including a plurality of secondary batteries in a module frame, (S2) a step of locating the module frame at a cover frame seated on a folding jig, and (S3) a step of folding the cover frame such that the cover frame wraps around a part of an outer surface of the module frame through the folding jig, wherein, in step (S2), a first protrusion and a second protrusion provided on edges of both sides of the folding jig are inserted into a first hole and a second hole formed in edges of both sides of the cover frame, respectively.

## Description

### [Technical Field]

This application claims the benefit of priority to Korean Patent Application No. 10-2024-0193070 filed on December 20, 2024, the disclosure of which is incorporated herein by reference in its entirety.

The present invention relates to a battery module manufacturing method, and more particularly to a ba ttery module manufacturing method capable of manufacturing a battery module with a cover frame in tight contact to prevent flame backflow during thermal runaway of the battery module.

### [Background Art]

With technological development of mobile devices and an increase in demand therefor, secondary batteries, which are capable of being charged and discharged, have been used as an energy source for various mobile devices. Secondary batteries have also attracted attention as an energy source for electric vehicles and hybrid electric vehicles presented as alternatives to existing gasoline and diesel vehicles, which use fossil fuels.

Depending on the shape of a battery case, secondary batteries are categorized into a cylindrical battery having an electrode assembly mounted in a cylindrical metal can, a prismatic battery having an electrode assembly mounted in a prismatic metal can, and a pouch-shaped battery having an electrode assembly mounted in a pouch-shaped case made of an aluminum laminate sheet.

Required capacities of secondary batteries used as energy sources of various kinds of electronic devices inevitably used in modern society have been increased due to an increase in usage of mobile devices, increasing complexity of the mobile devices, and development of electric vehicles. In order to satisfy demand of users, a plurality of battery cells is disposed in a small-sized device, whereas a battery module including a plurality of battery cells electrically connected to each other or a battery pack including a plurality of battery modules is used in a vehicle, etc.

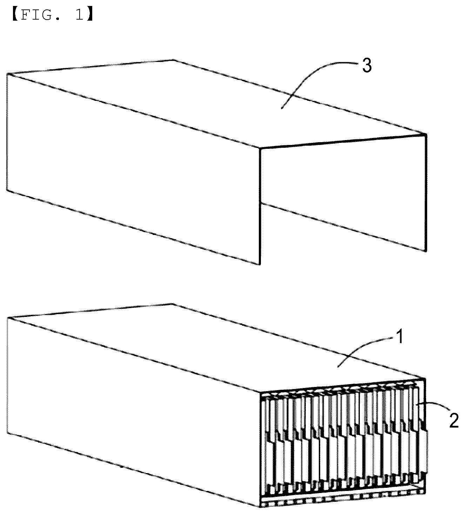

FIG. 1 is an exploded perspective view illustrating a conventional battery module. Referring to FIG. 1, the conventional battery module includes a module case 1 configured to receive a plurality of battery cells 2 and a cover frame 3 configured to wrap around an upper surface and both side surfaces of the module case 1.

When an event such as thermal runaway occurs in the battery module, gas or flames may be randomly discharged to the outside. If the discharge of gas or flames is not properly controlled at this time, there is a risk that the gas or flames may be discharged toward other battery modules, potentially causing a thermal chain reaction in other battery modules.

In order to properly discharge flames during such thermal runaway, a cover frame 3 is disposed at an outer surface of the module case 1.

However, during the process of bringing the cover frame 3 into tight contact with the module case 1 so as to wrap around the upper surface and both side surfaces thereof, accurate tight contact between the cover frame 3 and the module case 1 is not achieved due to the absence of a structure that fixes the position of the cover frame 3.

If the cover frame 3 is not brought into tight contact with the module case 1 at a proper position, the cover frame 3 covers a hole formed in the module case 1, thereby obstructing the discharge of gas or flames generated in the module case 1 during thermal runaway.

### (Prior Art Document)

(Patent Document 1) Korean Patent Application Publication No. 10-2024-0087500

### [Disclosure]

### [Technical Problem]

The present invention has been made in view of the above problems, and it is an object of the present invention to provide a battery module manufacturing method enabling a cover frame to be in tight contact with a predetermined position on a module frame without covering a hole in the module frame.

### [Technical Solution]

As a technical means for achieving the above object, a battery module manufacturing method according to an embodiment of the present invention includes (S1) a step of receiving a cell assembly (110) including a plurality of secondary batteries (10) in a module frame (120), (S2) a step of locating the module frame (120) at a cover frame (130) seated on a folding jig (200), and (S3) a step of folding the cover frame (130) such that the cover frame (130) wraps around a part of an outer surface of the module frame (120) through the folding jig (200), wherein, in step (S2), a first protrusion (221a) and a second protrusion (222a) provided on edges of both sides of the folding jig (200) are inserted into a first hole (132a) and a second hole (133a) formed in edges of both sides of the cover frame (130), respectively.

Also, in the battery module manufacturing method according to the embodiment of the present invention, in step (S2), an upper surface of the module frame (120) may be seated so as to face a main portion (131) of the cover frame (130).

Also, in the battery module manufacturing method according to the embodiment of the present invention, the cover frame (130) may include the main portion (131) seated on the upper surface of the module frame (120), a first folding portion (132) disposed on one side of the main portion (131), the first hole (132a) being formed in an edge of one side of the first folding portion, and a second folding portion (133) disposed on the other side of the main portion (131), the second hole (133a) being formed in an edge of the other side of the second folding portion.

Also, in the battery module manufacturing method according to the embodiment of the present invention, the module frame (120) may be provided in the upper surface thereof with a plurality of through-holes (121), each having a certain cutout area, and the main portion (131) may have a plurality of opening and closing holes (131a), each having a certain cutout area, formed at positions corresponding to the through-holes (121).

Also, in the battery module manufacturing method according to the embodiment of the present invention, in step (S2), the module frame (120) may be seated on the cover frame (130) such that the through-hole (121) overlaps the opening and closing hole (131a).

Also, in the battery module manufacturing method according to the embodiment of the present invention, the folding jig (200) may include a seating portion (210) configured to allow the main portion (131) to be seated thereon and a support portion including a first support portion (221) located on one side of the seating portion (210), the first support portion being configured to allow the first folding portion (132) to be seated thereon, and a second support portion (222) located on the other side of the seating portion (210), the second support portion being configured to allow the second folding portion (133) to be seated thereon.

Also, in the battery module manufacturing method according to the embodiment of the present invention, the first support portion (221) may include a first protrusion (221a) formed on an upper surface thereof so as to partially protrude upward, and the second support portion (222) may include a second protrusion (222a) formed on an upper surface thereof so as to partially protrude upward.

Also, in the battery module manufacturing method according to the embodiment of the present invention, the first protrusion (221a) may be formed at a position corresponding to the first hole (132a), and the second protrusion (222a) may be formed at a position corresponding to the second hole (133a).

Also, in the battery module manufacturing method according to the embodiment of the present invention, the first hole (132a) may be formed in a slit shape partially extending to one side, and the second hole (133a) may be formed in a slit shape partially extending to the other side.

Also, in the battery module manufacturing method according to the embodiment of the present invention, the slit length of the first hole (132a) may be greater than the height of the first protrusion (221a), and the slit length of the second hole (133a) may be greater than the height of the second protrusion (222a).

Also, in the battery module manufacturing method according to the embodiment of the present invention, each of the first protrusion (221a) and the second protrusion (222a) may be made of a material having elastic restoring force.

Also, in the battery module manufacturing method according to the embodiment of the present invention, in step (S3), the seating portion (210) may be driven downward to fold the cover frame (130).

Also, in the battery module manufacturing method according to the embodiment of the present invention, in step (S3), the first support portion (221) and the second support portion (222) may be driven upward to fold the cover frame (130).

### [Advantageous Effects]

As is apparent from the above description, a battery module manufacturing method according to the present invention has the advantage that a cover frame is folded in the state in which the cover frame is seated on a folding jig such that protrusions formed on edges of both sides of the folding jig are inserted into holes formed in edges of both sides of the cover frame, whereby the cover frame is brought into tight contact with a predetermined position on a module frame.

Also, the battery module manufacturing method according to the present invention has the advantage that, since the cover frame is brought into tight contact with the predetermined position on the module frame, a hole formed in the module frame is not covered and overlaps a hole formed in the cover frame, whereby it is possible to discharge flames and gas when thermal runaway occurs in a battery module and thus to prevent the spread of flames and the like.

### [Description of Drawings]

FIG. 1 is an exploded perspective view illustrating a conventional battery module.
FIG. 2 is a flowchart illustrating a battery module manufacturing method according to the present invention.
FIG. 3 is an exploded perspective view illustrating a battery module manufactured by the battery module manufacturing method according to the present invention.
FIG. 4 is a perspective view illustrating a cover frame constituting the battery module manufactured by the battery module manufacturing method according to the present invention.
FIG. 5 is a side view illustrating a seating step of the battery module manufacturing method according to the present invention.
FIG. 6 is a top view illustrating the seating step of the battery module manufacturing method according to the present invention.
FIG. 7 is a view illustrating a folding step of the battery module manufacturing method according to the present invention.
FIG. 8 is a view illustrating an example of a protrusion and a hole in the folding step of the battery module manufacturing method according to the present invention.
FIG. 9 is a view illustrating another example of the protrusion and the hole in the folding step of the battery module manufacturing method according to the present invention.
FIG. 10 is a view illustrating a modification of the folding step of the battery module manufacturing method according to the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a predetermined element is included does not mean that other elements are excluded, but means that such elements may be further included unless mentioned otherwise.

Hereinafter, a battery module manufacturing method according to the present invention will be described.

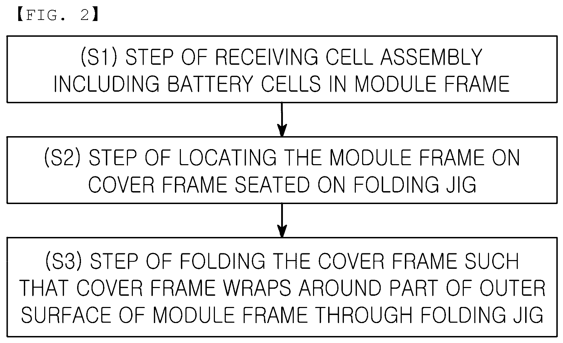

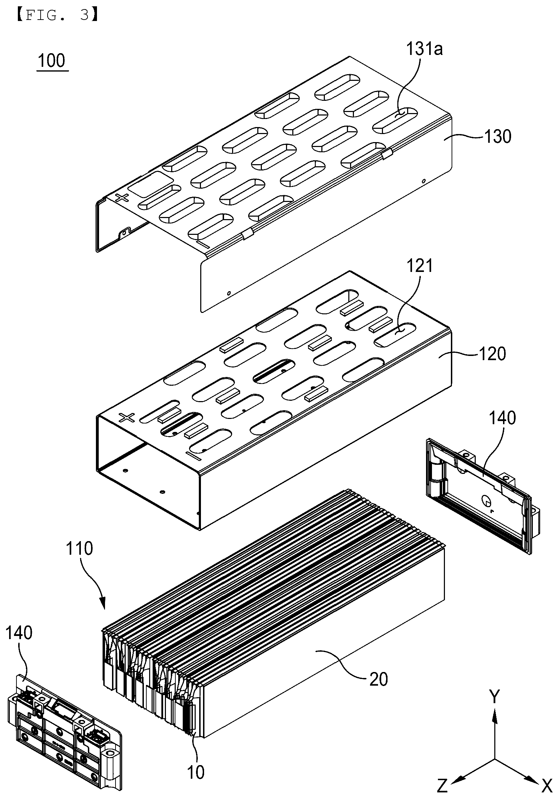

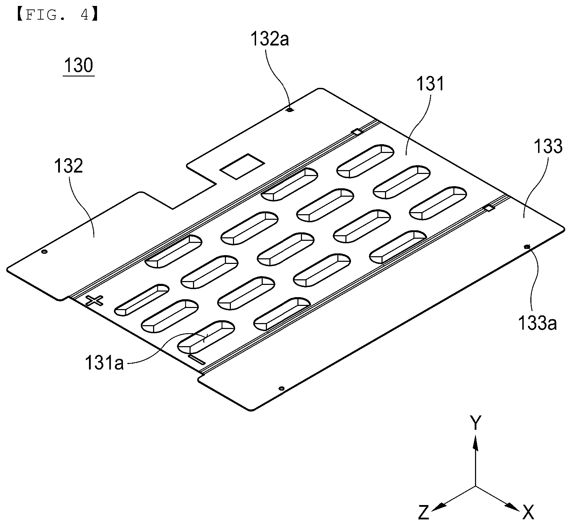

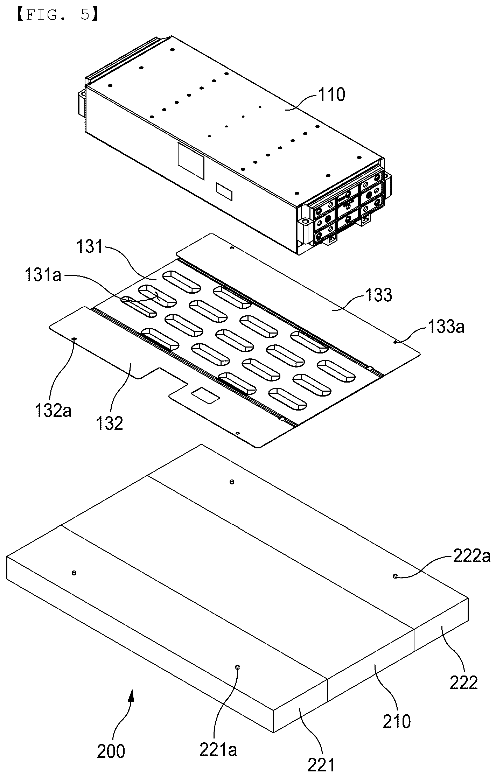

FIG. 2 is a flowchart illustrating a battery module manufacturing method according to the present invention, and FIG. 3 is an exploded perspective view illustrating a battery module manufactured by the battery module manufacturing method according to the present invention. In addition, FIG. 4 is a perspective view illustrating a cover frame constituting the battery module manufactured by the battery module manufacturing method according to the present invention, and FIG. 5 is a side view illustrating a seating step of the battery module manufacturing method according to the present invention.

Referring to FIGs. 2 to 5, the battery module manufacturing method according to the present invention includes (S1) a step of receiving a cell assembly 110 including a plurality of secondary batteries 10 in a module frame 120, (S2) a step of locating the module frame 120 at a cover frame 130 seated on a folding jig 200, and (S3) a step of folding the cover frame 130 such that the cover frame 130 wraps around a part of an outer surface of the module frame 120 through the folding jig 200.

First, in step (S1), the cell assembly 110 may include a plurality of secondary batteries 10 stacked in one direction and a buffer pad 20. The secondary battery 10 may be a pouch-shaped secondary battery including an electrode assembly, a battery case configured to receive the electrode assembly, an electrode lead protruding outward from the battery case, and an insulating film located between the battery case and the electrode lead.

The electrode assembly may be a jelly-roll type electrode assembly, which is configured to have a structure in which a long sheet type negative electrode and a long sheet type positive electrode are wound in the state in which a separator is interposed therebetween, a stacked type electrode assembly including unit cells, each of which is configured to have a structure in which a rectangular positive electrode and a rectangular negative electrode are stacked in the state in which a separator is interposed therebetween, a stacked and folded type electrode assembly, which is configured to have a structure in which unit cells are wound using a long separation film, or a laminated and stacked type electrode assembly, which is configured to have a structure in which unit cells are stacked in the state in which a separator is interposed therebetween and are then attached to each other; however, the present invention is not limited thereto.

The positive electrode includes a positive electrode current collector and a positive electrode active material applied to each of an upper surface and a lower surface of the positive electrode current collector. The positive electrode active material may be mixed with a conductive agent and a binder, and a filler is further added as needed.

In general, the positive electrode current collector may have a thickness of 3 to 500 µm. The positive electrode current collector is not particularly restricted as long as the positive electrode current collector exhibits high conductivity while the positive electrode current collector does not induce any chemical change in a battery to which the positive electrode current collector is applied. For example, the positive electrode current collector may be made of stainless steel, aluminum, nickel, titanium, or sintered carbon. Alternatively, the positive electrode current collector may be made of aluminum or stainless steel, the surface of which is treated with carbon, nickel, titanium, or silver. In addition, the positive electrode current collector may have a micro-scale uneven pattern formed on the surface thereof so as to increase adhesion of the positive electrode active material, or may be configured in any of various forms, such as a film, a sheet, a foil, a net, a porous body, a foam body, and a non-woven fabric body.

A layered compound, such as lithium cobalt oxide (LiCoO₂) or lithium nickel oxide (LiNiO₂), or a compound substituted with one or more transition metals; a lithium manganese oxide represented by the chemical formula Li₁₊ₓMn₂₋ₓO₄ (where x = 0 to 0.33) or a lithium manganese oxide, such as LiMnO₃, LiMn₂O₃, or LiMnO₂; lithium copper oxide (Li₂CuO₂); a vanadium oxide, such as LiV₃O₈, V₂O₅, or Cu₂V₂O₇; a Ni-sited lithium nickel oxide represented by the chemical formula LiNi₁₋ₓMₓO₂ (where M = Co, Mn, Al, Cu, Fe, Mg, B, or Ga, and x = 0.01 to 0.3); a lithium manganese composite oxide represented by the chemical formula LiMn₂₋ₓMₓO₂ (where M = Co, Ni, Fe, Cr, Zn, or Ta, and x = 0.01 to 0.1) or the chemical formula Li₂Mn₃MO₈ (where M = Fe, Co, Ni, Cu, or Zn); LiMn₂O₄ in which a part of Li in the chemical formula is replaced by alkaline earth metal ions; a disulfide compound; or Fe₂(MoO₄)₃ may be used as the positive electrode active material; however, the present invention is not limited thereto.

The negative electrode includes a negative electrode current collector and a negative electrode active material applied to each of an upper surface and a lower surface of the negative electrode current collector. The negative electrode active material may be further mixed with a conductive agent and a binder, and the negative electrode current collector may be coated with the mixture.

The negative electrode current collector is generally manufactured so as to have a thickness of 3 to 500 µm. The negative electrode current collector is not particularly restricted as long as the negative electrode current collector exhibits high conductivity while the negative electrode current collector does not induce any chemical change in a battery to which the negative electrode current collector is applied. For example, the negative electrode current collector may be made of copper, stainless steel, aluminum, nickel, titanium, or sintered carbon. Alternatively, the negative electrode current collector may be made of copper or stainless steel, the surface of which is treated with carbon, nickel, titanium, or silver, or an aluminum-cadmium alloy. Furthermore, in the same manner as the positive electrode current collector, the negative electrode current collector may have a micro-scale uneven pattern formed on the surface thereof in order to increase adhesion of the negative electrode active material, or may be configured in any of various forms, such as a film, a sheet, a foil, a net, a porous body, a foam body, and a non-woven fabric body.

The separator prevents short circuit between the negative electrode and the positive electrode and allows only migration of lithium ions, and an insulating thin film having high ion permeability and mechanical strength is used as the separator. The pore diameter of the separator is typically 0.01 to 10 µm, and the thickness of the separator is typically 5 to 300 µm. It is preferable for the separator to be made of any one selected from among polyethylene, polypropylene, a dual layer of polyethylene/polypropylene, a triple layer of polyethylene/polypropylene/polyethylene, a triple layer of polypropylene/polyethylene/polypropylene, and organic fiber filter paper; however, the present invention is not limited thereto.

Meanwhile, each of the negative electrode current collector and the positive electrode current collector includes a part to which a slurry mixture including the active material is applied and an uncoated portion, which is a part to which no slurry mixture is applied, wherein the uncoated portion is cut to form an electrode tab, or a separate conductive member is connected to the uncoated portion by ultrasonic welding to form an electrode tab, and electrode tabs are gathered to form a tab bundle.

The battery case, which receives the electrode assembly, is made of a laminate sheet including an outer covering layer, a metal layer, and an inner covering layer, and has a receiving portion formed therein.

The inner covering layer is in direct contact with the electrode assembly, and therefore the inner covering layer must exhibit high insulation properties and high electrolytic resistance. In addition, the inner covering layer must exhibit high sealability in order to hermetically isolate the battery case from the outside, i.e., a thermally-bonded sealed portion between inner layers must exhibit excellent thermal bonding strength.

The inner covering layer may be made of a material selected from among a polyolefin-based resin, such as polypropylene, polyethylene, polyethylene acrylic acid, or polybutylene, a polyurethane resin, and a polyimide resin, which exhibit excellent chemical resistance and high sealability; however, the present invention is not limited thereto, and polypropylene, which exhibits excellent mechanical properties, such as tensile strength, rigidity, surface hardness, and impact resistance, and excellent chemical resistance, is the most preferably used.

The metal layer, which abuts the inner covering layer, corresponds to a barrier layer configured to prevent moisture or various gases from permeating into the battery from the outside. An aluminum thin film, which is lightweight and easily shapeable, may be used as a preferred material for the metal layer.

The outer covering layer is provided at the other surface of the metal layer, and the outer covering layer may be made of a heat-resistant polymer that exhibits excellent tensile strength, resistance to moisture permeation, and resistance to air transmission such that the outer covering layer exhibits high heat resistance and chemical resistance while protecting the electrode assembly. As an example, the outer covering layer may be made of nylon or polyethylene terephthalate; however, the present invention is not limited thereto.

In general, the pair of electrode leads, which is constituted by the positive electrode lead and the negative electrode lead, is connected respectively to the electrode tab bundles, more specifically a positive electrode tab bundle and a negative electrode tab bundle, by welding or the like, and protrudes outwardly of the pouch case.

Although the secondary battery 10 having a structure in which the electrode leads protrude in opposite directions has been described and shown in the figures, a unidirectional pouch-shaped secondary battery having electrode leads protruding in one direction may also be used as another embodiment of the present invention.

In addition, the buffer pad 20 may be located on at least one of one side and the other side of the plurality of stacked secondary batteries 10, and may be interposed between the secondary batteries 10 as needed. The buffer pad 20 may be made of a material that readily changes volume under external pressure, such as sponge or non-woven fabric.

The cell assembly 110 including the secondary batteries 10 and the buffer pad 20 may be received in the module frame 120, and the module frame 120 may be a metal frame or a plastic frame with both surfaces open. More specifically, the module frame 120 may be open on both sides of the cell assembly 110 from which the electrode leads protrude.

In addition, although the module frame 120 is shown as a monoframe made of a metal plate in which an upper surface, a lower surface, and both side surfaces are integrally connected to each other, a structure in which a top cover is joined to a U-shaped frame with an open top or a structure in which a U-shaped frame and an inverted U-shaped frame are coupled to each other may also be used.

A plurality of through-holes 121 each having a certain cutout area may be formed in the upper surface of the module frame 120. The through-holes 121 may be formed in the upper surface of the module frame 120 in a forward-backward direction (Z-axis direction) and a leftward-rightward direction (X-axis direction).

In order to discharge venting gas generated from the secondary battery 10 received in the module frame 120 to the outside, the through-hole 121 may be formed through the module frame 120 such that an inner space and an outer space of the module frame 120 communicate with each other. The through-hole 121 may prevent the module frame 120 from exploding due to increased internal pressure caused by venting gas.

Prior to step (S2), a step of disposing an end plate 140 at each of both open side surfaces of the module frame 120 to hermetically seal the interior of the module frame 120 may be performed. At this time, the end plate 140 may close each of both side surfaces of the module frame 120 to protect the plurality of secondary batteries 10 received therein.

Each of the module frame 120 and the end plate 140 may be made of any of various materials such as metal or plastic, and more specifically aluminum.

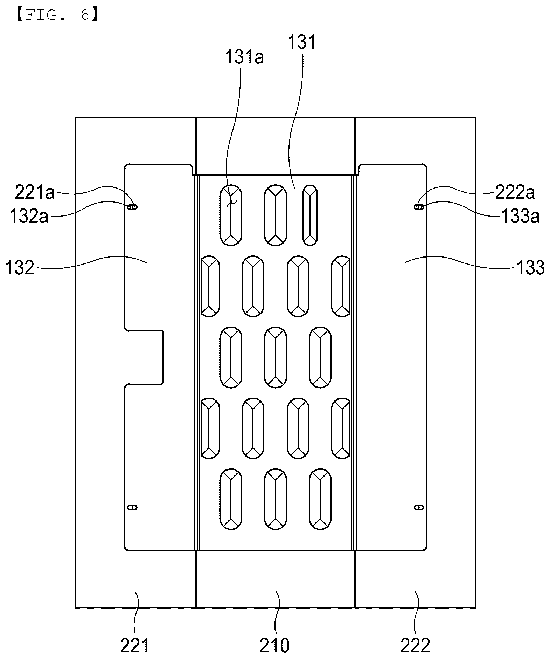

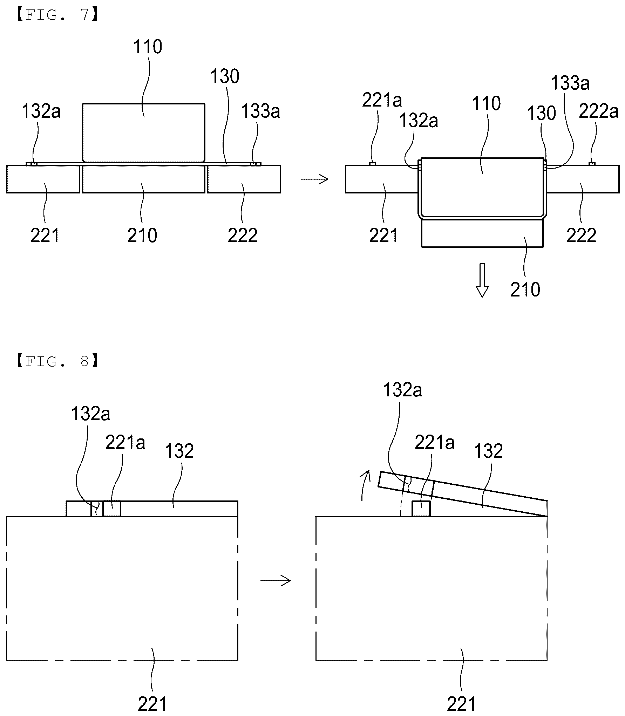

FIG. 6 is a top view illustrating the seating step of the battery module manufacturing method according to the present invention. In addition, FIG. 7 is a view illustrating a folding step of the battery module manufacturing method according to the present invention, and FIG. 8 is a view illustrating an example of a protrusion and a hole in the folding step of the battery module manufacturing method according to the present invention.

Referring to FIGs. 2 to 8, in step (S2), the cover frame 130 may be seated on the folding jig 200 so as to be folded toward the module frame 120 and adhered thereto.

First, the cover frame 130 may include a main portion 131, a first folding portion 132, and a second folding portion 133 to wrap around the upper surface and both side surfaces of the module frame 120. In this case, the main portion 131 may be seated on the upper surface of the module frame 120, and the first folding portion 132 and the second folding portion 133 may be seated on both side surfaces of the module frame 120, respectively.

The main portion 131 may be provided with a plurality of opening and closing holes 131a, each having a certain cutout area, formed at positions corresponding to the plurality of through-holes 121 formed in the upper surface of the module frame 120. In this case, the opening and closing hole 131a may be formed in a shape corresponding to the through-hole 121. For example, if the through-hole 121 is formed in an oval shape, the opening and closing hole 131a may also be formed with a similar size and shape.

The opening and closing hole 131a may be a hole including an opening and closing member configured to open and close the through-hole 121 according to the internal pressure of the module frame 120. For example, the opening and closing hole 131a may remain closed in a normal state in which the internal pressure of the module frame 120 is at a predetermined level or less, thereby preventing foreign matter, such as moisture or dust, from entering the module frame 120 through the through-hole 121.

Furthermore, if the internal pressure of the module frame 120 exceeds the predetermined level, a part of the opening and closing member may open to discharge gas or flames present in the module frame 120 to the outside. At this time, the opening and closing hole 131a of the battery module 100 located in the vicinity of a battery module 100 including a thermal runaway secondary battery 10 may remain closed to prevent introduction of venting gases or flames discharged due to thermal runaway into the battery module.

The opening and closing member may be configured as a cut line formed in a sheet constituting the cover frame 130. As another example, the opening and closing member may be formed as a plug configured to open and close the opening and closing hole 131a or configured as a door. Since the opening and closing member is known to those skilled in the art, a more detailed description thereof will be omitted.

In step (S2), the module frame 120 may be seated on the cover frame 130 such that the through-hole 121 overlaps the opening and closing hole 131a. At this time, the module frame 120 may be seated such that the upper surface thereof in which the through-hole 121 is formed faces the main portion 131 of the cover frame 130.

The first folding portion 132 may be provided on one side of the main portion 131 (11 o'clock position in FIG. 4), and, in step (S3), may be folded from the main portion 131 and be seated on one side surface of the module frame 120.

A first hole 132a may be formed in an edge of one side of the first folding portion 132, wherein the first hole 132a may be formed in a slit shape extending to one side by a predetermined distance or more.

In addition, the second folding portion 133 may be provided on the other side of the main portion 131 (5 o'clock position in FIG. 4), and, in step (S3), may be folded from the main portion 131 and be seated on the other side surface of the module frame 120.

A second hole 133a may be formed on an edge of the other side of the second folding portion 133, wherein the second hole 133a may be formed in a slit shape extending to the other side by a predetermined distance or more.

A more detailed description of the first hole 132a and the second hole 133a will be given later.

Meanwhile, the folding jig 200 configured to fold the cover frame 130 may include a seating portion 210, a support portion 220, and a driving portion (not shown).

The seating portion 210 may be configured to allow the main portion 131 to be seated thereon. In step (S2), the main portion 131 may be seated on an upper surface of the seating portion 210, and the module frame 120 may be seated thereon.

The width-direction length of the seating portion 210 may correspond to the width-direction length of the main portion 131. By the above width-direction length setting, when the cover frame 130 is folded in step (S3), a height difference may occur between the upper surface of the seating portion 210 and the upper surface of the support portion 220, whereby the first folding portion 132 and the second folding portion 133 may be folded along a boundary line between the main portion 131 and the first folding portion 132 and a boundary line between the main portion 131 and the second folding portion 133, respectively.

The support portion 220 may include a first support portion 221 located on one side of the seating portion 210 (1 o'clock position in FIG. 5) and a second support portion 222 located on the other side of the seating portion 210(7 o'clock position in FIG. 5). The first folding portion 132 of the cover frame 130 may be seated on an upper surface of the first support portion 221 (12 o'clock position in FIG. 5), and the second folding portion 133 of the cover frame 130 may be seated on an upper surface of the second support portion 222.

A first protrusion 221a may be formed on the upper surface of the first support portion 221 (12 o'clock position in FIG. 5) so as to partially protrude upward. In this case, the first protrusion 221a may be formed at a position corresponding to the first hole 132a formed in the first folding portion 132 such that the first protrusion 221a is inserted into the first hole 132a when the first folding portion 132 is seated on the first support portion 221 in step (S2).

In addition, a second protrusion 222a may be formed on the upper surface of the second support portion 222 (12 o'clock position in FIG. 5) so as to partially protrude upward. In this case, the second protrusion 222a may be formed at a position corresponding to the second hole 133a formed in the second folding portion 133 such that the second protrusion 222a is inserted into the second hole 133a when the second folding portion 133 is seated on the second support portion 222 in step (S2).

In other words, in step (S2), the first protrusion 221a and the second protrusion 222a, provided respectively on the edges of both sides of the folding jig 200, may be inserted respectively into the first hole 132a and the second hole 133a formed respectively on the edges of both sides of the cover frame 130 to temporarily fix the positions of the first folding portion 132 and the second folding portion 133.

The cover frame 130 may be temporarily fixed to the folding jig 200 by the projections 221a and 222a and the holes 132a and 133a, and when the cover frame 130 is folded and brought into tight contact with the module frame 120, it is possible to prevent misalignment between the cover frame 130 and the outer surface of the module frame 120.

The first protrusion 221a may be located at the other end of the first hole 132a formed in a slit shape partially extending to one side, and the second protrusion 222a may be located at one end of the second hole 133a formed in a slit shape partially extending to the other side. Consequently, it is possible to prevent the cover frame 130 from swaying in a horizontal direction (1 o'clock to 7 o'clock direction in FIG. 5) in a state of being seated on the folding jig 200 due to the first slit-shaped hole 132a and second slit-shaped hole 133a.

In addition, referring to FIG. 8, each of the first protrusion 221a and the second protrusion 222a may have a height less than the slit length of a corresponding one of the first hole 132a and the second hole 133a. In other words, the slit length of the first hole 132a may be greater than the height of the first protrusion 221a, and the slit length of the second hole 133a may be greater than the height of the second protrusion 222a.

Due to the relationship between the slit length of the first hole 132a and the height of the first protrusion 221a, when the first folding portion 132 is folded so as to be bent toward one surface of the module frame 120 in step (S3), the region thereof where the first hole 132a is not formed may contact the first protrusion 221a, whereby it is possible to prevent the first folding portion 132 from being damaged by the first protrusion 221a or the folding process from being interrupted by the height of the first protrusion 221a.

Furthermore, it is obvious that the same effect can be achieved through the relationship between the slit length of the second hole 133a and the height of the second protrusion 222a.

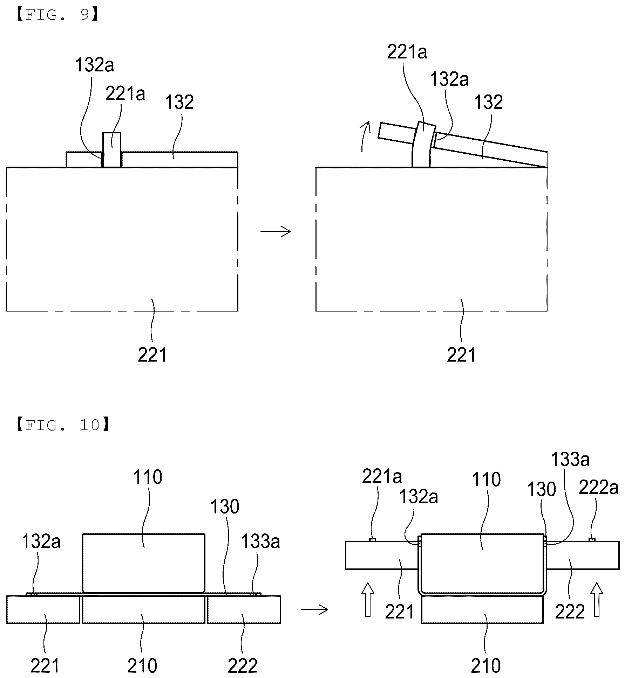

FIG. 9 is a view illustrating another example of the protrusion and the hole in the folding step of the battery module manufacturing method according to the present invention. The other example of the first protrusion 221a and the second protrusion 222a will be described with reference to FIG. 9. Each of the first protrusion 221a and the second protrusion 222a may be made of a material having elastic restoring force. In this case, each of the first protrusion 221a and the second protrusion 222a may be made of a material having elastic restoring force, such as rubber, silicone, or a spring.

Since the first protrusion 221a is made of a material having elastic restoring force, when the first folding portion 132 is folded toward the module frame 120 in step (S3), the first hole 132a may be separated from the first protrusion 221a along an arched path. At this time, the region of the first folding portion where the first hole 132a is not formed comes into contact with the first protrusion 221a, whereby the first protrusion 221a may be bent along the first folding portion 132, and therefore the first hole 132a may be separated from the first protrusion 221a.

In addition, since the second protrusion 222a is made of a material having elastic restoring force, when the second folding portion 133 is folded toward the module frame 120 in step (S3), the second hole 133a may be separated from the second protrusion 222a along an arched path. At this time, the region of the second folding portion where the second hole 133a is not formed comes into contact with the second protrusion 222a, whereby the second protrusion 222a may be bent along the second folding portion 133, and therefore the second hole 133a may be separated from the second protrusion 222a.

Accordingly, it is possible to prevent damage to the first folding portion 132 and the second folding portion 133 by the first protrusion 221a and the second protrusion 222a or folding interruption due to the height of the first protrusion 221a and the height of the second protrusion 222a.

Referring back to FIG. 7, in step (S3), the folding jig 200 may drive the seating portion 210 downward through the driving portion (not shown) to fold the cover frame 130. The driving portion (not shown) may be connected to the seating portion 210 to drive the seating portion 210 upward or downward.

For example, the driving portion (not shown) may drive the seating portion 210 downward to create a height difference between the upper surface of the seating portion 210 and the upper surface of the support portion 220 such that the cover frame 130 is folded through the height difference in step (S3), and may drive the seating portion 210 upward such that the height of the upper surface of the seating portion 210 and the height of the upper surface of the support portion 220 correspond to each other after step (S3).

FIG. 10 is a view illustrating a modification of the folding step of the battery module manufacturing method according to the present invention.

Referring to FIG. 10, in step (S3), the folding jig 200 may drive the support portion 220 upward through the driving portion (not shown) to fold the cover frame 130. The driving portion (not shown) may be connected to the first support portion 221 and the second support portion 222 to drive the first support portion 221 and the second support portion 222 upward or downward.

For example, the driving portion (not shown) may drive the first support portion 221 and the second support portion 222 upward to create a height difference between the upper surface of the seating portion 210 and the upper surface of the support portion 220 such that the cover frame 130 is folded through the height difference in step (S3), and may drive the support portion 220 downward such that the height of the upper surface of the seating portion 210 and the height of the upper surface of the support portion 220 correspond to each other after step (S3).

In addition, the driving portion (not shown) may be provided for each of the seating portion 210 and the support portion 220, and in step (S3), the driving portion (not shown) may drive the seating portion 210 downward and drive the support portion 220 upward to create a height difference between the seating portion 210 and the support portion 220 such that the cover frame 130 is folded.

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the category and the technical idea of the present invention, and it will be obvious that such changes and modifications fall within the scope of the appended claims.

### (Description of Reference Symbols)

10: Secondary battery
20: Buffer pad
100: Battery module
110: Cell assembly
120: Module frame 121: Through-hole
130: Cover frame
131: Main portion 131a: Opening and closing hole
132: First folding portion 132a: First hole
133: Second folding portion 133a: Second hole
140: End plate
200: Folding jig
210: Seating portion
220: Support portion
221:First support portion 221a: First protrusion
222: Second support portion 222a: Second protrusion

## Claims

1. A battery module manufacturing method comprising:
(S1) receiving a cell assembly comprising a plurality of secondary batteries in a module frame;
(S2) locating the module frame at a cover frame seated on a folding jig; and
(S3) folding the cover frame such that the cover frame wraps around a part of an outer surface of the module frame through the folding jig, wherein
in step (S2), a first protrusion and a second protrusion provided on edges of both sides of the folding jig are inserted into a first hole and a second hole formed in edges of both sides of the cover frame, respectively.

2. The battery module manufacturing method according to claim 1, wherein, in step (S2), an upper surface of the module frame is seated so as to face a main portion of the cover frame.

3. The battery module manufacturing method according to claim 2, wherein the cover frame comprises:
the main portion seated on the upper surface of the module frame;
a first folding portion disposed on one side of the main portion, the first hole being formed in an edge of one side of the first folding portion; and
a second folding portion disposed on the other side of the main portion, the second hole being formed in an edge of the other side of the second folding portion.

4. The battery module manufacturing method according to claim 3, wherein
the module frame is provided in the upper surface thereof with a plurality of through-holes, each having a certain cutout area, and
the main portion has a plurality of opening and closing holes, each having a certain cutout area, formed at positions corresponding to the through-holes.

5. The battery module manufacturing method according to claim 4, wherein, in step (S2), the module frame is seated on the cover frame such that the through-hole overlaps the opening and closing hole.

6. The battery module manufacturing method according to claim 3, wherein the folding jig comprises:
a seating portion configured to allow the main portion to be seated thereon; and
a support portion comprising a first support portion located on one side of the seating portion, the first support portion being configured to allow the first folding portion to be seated thereon, and a second support portion located on the other side of the seating portion, the second support portion being configured to allow the second folding portion to be seated thereon.

7. The battery module manufacturing method according to claim 6, wherein
the first support portion comprises a first protrusion formed on an upper surface thereof so as to partially protrude upward, and
the second support portion comprises a second protrusion formed on an upper surface thereof so as to partially protrude upward.

8. The battery module manufacturing method according to claim 7, wherein
the first protrusion is formed at a position corresponding to the first hole, and
the second protrusion is formed at a position corresponding to the second hole.

9. The battery module manufacturing method according to claim 8, wherein
the first hole is formed in a slit shape partially extending to one side, and
the second hole is formed in a slit shape partially extending to the other side.

10. The battery module manufacturing method according to claim 9, wherein
a slit length of the first hole is greater than a height of the first protrusion, and
a slit length of the second hole is greater than a height of the second protrusion.

11. The battery module manufacturing method according to claim 7, wherein each of the first protrusion and the second protrusion is made of a material having elastic restoring force.

12. The battery module manufacturing method according to claim 6, wherein, in step (S3), the seating portion is driven downward to fold the cover frame.

13. The battery module manufacturing method according to claim 6, wherein, in step (S3), the first support portion and the second support portion are driven upward to fold the cover frame.
